Europäisches Patentamt

European Patent Office

Office européen des brevets

(11) Veröffentlichungsnummer : **0 075 132**
**B1**

(12) **EUROPÄISCHE PATENTSCHRIFT**

(45) Veröffentlichungstag der Patentschrift :
26.03.86

(21) Anmeldenummer : **82107853.2**

(22) Anmeldetag : **26.08.82**

(51) Int. Cl.⁴ : **H 01 M 10/52, H 01 M 6/14,**
**H 01 M 4/62, H 01 M 2/08**

(54) **Galvanisches Element mit integriertem Getter.**

(30) Priorität : **15.09.81 DE 3136578**

(43) Veröffentlichungstag der Anmeldung :
**30.03.83 Patentblatt 83/13**

(45) Bekanntmachung des Hinweises auf die Patenterteilung : **26.03.86 Patentblatt 86/13**

(84) Benannte Vertragsstaaten :
**CH DE FR GB LI**

(56) Entgegenhaltungen :
**FR-A- 2 142 000**
**FR-A- 2 433 242**
**US-A- 3 186 875**
**US-A- 3 864 168**
**CHEMICAL ABSTRACTS, Band 83, 1975, Seite 276,**
**Nr. 118588q, Columbus, Ohio, USA**
**NAVY TECHNICAL DISCLOSURE BULLETIN, Band 5,**
**Nr. 5, Mai 1980, Seiten 17-19, Navy Case No. 63814**
**F.G. HOLT: "Hydrogen and water getter for use in**
**sealed, oxygen-containing environments with batte-**
**ries"**
**PATENTS ABSTRACTS OF JAPAN, Band 5, Nr. 86(E-**
**60)(758), 5. Juni 1981**

(73) Patentinhaber : **VARTA Batterie Aktiengesellschaft**
**Am Leineufer 51**
**D-3000 Hannover 21 (DE)**

(72) Erfinder : **von Alpen, Ulrich, Dr.**
**Im Kastanienhain 5**
**D-6246 Schlossborn (DE)**
Erfinder : **Nijhawan, Subash Chander, Dr.**
**Im Sand 23**
**D-6242 Kronberg (DE)**

(74) Vertreter : **Kaiser, Dieter Ralf, Dipl.-Ing.**
**Gundelhardtstrasse 72**
**D-6233 Kelkheim/Ts. (DE)**

## Beschreibung

Die Erfindung betrifft die Verwendung eines gas- und wasseradsorbierenden Gettermaterials mit hoher spezifischer Oberfläche in einem galvanischen Element mit einer festen negativen Alkalimetall-Elektrode, einem wasserfreien Elektrolyten und einer festen positiven Elektrode in einem mit einer Kunststoffmasse abgedichteten Metallgehäuse.

Unter den Elementen, die dem vorstehenden Gattungsbegriff zugeordnet werden können, sind insbesondere alle bei Raumtemperatur arbeitenden Lithiumzellen vertreten, die aufgrund ihres hohen Energieinhalts in Verbindung mit zahlreichen neuen Kathodendepolarisatoren z. Z. wegweisend für die Weiterentwicklung elektrochemischer Stromquellen sind. Die Reaktionsfreudigkeit der Alkalimetalle allgemein läßt allerdings nur die Verwendung nichtwässriger Elektrolytsysteme zu. Zu den schon länger gebräuchlichen Flüssigelektrolyten auf Basis organischer Lösungsmittel haben sich neuerdings auch einige Festkörperelektrolyte bei den Alkalizellen hinzugesellt, die sich durch das Charakteristikum einer guten $Li^+$- bzw. $Na^+$-Ionenleitfähigkeit bereits bei Raumtemperatur auszeichnen. Die leichte Herstellbarkeit elektrochemischer Festkörperzellen mit ausschließlich festen aktiven Bestandteilen in Sandwich-Anordnung hat auch deren Miniaturisierung für wichtige Anwendungsgebiete, z. B. in elektronischen Armbanduhren, außerordentlich begünstigt.

Bei der Herstellung von solchen galvanischen Elementen ist es besonders wichtig, auf weitgehende Wasserfreiheit des Elektrolyten und der Elektrodenmaterialien zu achten. Wasser im organischen Elektrolyten setzt die Lagerfähigkeit der Zelle herab und führt zu einer Passivierung der negativen Elektrode.

Zur Beseitigung von geringen Wassermengen aus den Bestandteilen derartiger Zellen ist es aus der US-A-3 864 168 bekannt, in der Zelle ein wasserabsorbierendes Material, insbesondere synthetische Zeolithe, anzuordnen, beispielsweise als poröse Schicht, die in Kontakt mit dem organischen Elektrolyten steht.

Aus der JP-A-75 33 419 (Chemical Abstracts, Band 83, 1975, Seite 276, 118588) ist es bekannt, auf dem Separator einer solchen Zelle eine Schicht anzuordnen, die ein Molekularsiebmaterial enthält und auch in die positive Elektrode Molekularsiebmateriel einzuarbeiten.

In der FR-A-2 142 000 oder der US-A-3 186 875 sind aus Molekularsiebmaterial bestehende Träger für den Festelektrolyten einer Festkörperzelle behandelt, durch welche die Ionenleitfähigkeit des Elektrolyten verbessert werden soll.

Auch bei Verwendung wasserfreier Materialien bei der Herstellung der Zellen bleibt mit dem Betrieb von Alkalizellen eine besondere Gefahr naturgemäß immer verbunden : ihre Anfälligkeit gegen eindringenden Luftsauerstoff, $CO_2$ oder sogar eindiffundierendes Wasser. Indem nämlich das Alkalimetall mit den Gasen zu Oxid, Oxidhydrat oder Karbonat reagiert, passiviert die Zelle, ihr Innenwiderstand wird hochohmig, und die Strombelastbarkeit geht zurück. Außerdem verliert die Alkalimetallelektrode an Kapazität.

Gewöhnlich sind die Teile von Metallgehäusen, beispielsweise bei Knopfzellen, mit einem thermoplastischen Kunststoffmaterial wie Polyäthylen oder Polypropylen abgedichtet. Dieses besitzt eine so hohe Eigenporosität, daß eine Durchdringung (Permeation) von Gasen oder Dämpfen über längere Zeiträume nicht auszuschließen ist.

Eine wirksame Abhilfe ließ sich bisher nur mit Hilfe spezieller Glas-Metall-Abdichtungen am Zellengehäuse oder mit Keramik-Metalldurchführungen schaffen. Diese sind jedoch technisch aufwendig und teuer.

Der Erfindung liegt deshalb die Aufgabe zugrunde, ein galvanisches Element nach dem eingangs beschriebenen Gattungsbegriff anzugeben, welches vor der Gefahr einer Korrosion der Alkalimetallelektrode insbesondere durch von außen eindringende Feuchtigkeit geschützt ist.

Gegenstand der Erfindung ist ein galvanisches Element mit einer festen negativen Alkalimetall-Elektrode, einem wasserfreien Elektrolyten und einer festen positiven Elektrode in einem mit einer Kunststoffmasse abgedichteten Metallgehäuse, welches mit einem gasadsorbierenden anorganischen Gettermaterial von hoher spezifischer Oberfläche versehen ist, dadurch gekennzeichnet, daß das anorganische gas- und wasseradsorbierende Gettermaterial in der Kunststoffdichtungsmasse enthalten ist.

Die erfindungsgemäße Maßnahme geht aus von dem Befund, daß an sich bekannte, wegen ihres hohen Adsorptionsvermögens gegenüber Gasen zum sogenannten « Gettern » benutzte Substanzen bis zu etwa 40 % ihres Eigengewichts an Wasser aufnehmen können.

Bei engporigen Adsorbentien lassen sich heute gezielt spezifische Oberflächen bis 750 $m^2/g$ erreichen. Als Gettermaterial mit den erwünschten Eigenschaften kommen vorzugsweise Silicagel, aktivierte Tonerde oder die zur Klasse der sog. Alumosilicate zählenden Zeolithe in Betracht. Letztere zeichnen sich in besonderem Maße durch die Eigenschaft aus, in Hohlkanälen ihres Kristallgitters, die parallel zu den Silikatketten verlaufen, Wassermoleküle einzulagern und diese durch Erhitzen wieder abzugeben. Bei den « Molekularsieben » macht man von diesem Verhalten Gebrauch.

Die genannten Adsorbentien sind gegenüber den in Alkalizellen eingesetzten aktiven Substanzen einschließlich deren Elektrolyte chemisch indifferent. Bevorzugte Elektrolyte sind in diesem Falle Lösungen eines Alkalisalzes wie $LiClO_4$, $LiAsF_6$ oder $LiAlCl_4$ im organischen Lösungsmitteln wie Propylencarbonat, Dimethoxiäthan, Tetrahydrofuran usw., auch in geeigneten Mischungen derselben. Unter den einsetzbaren reduzierbaren Substanzen der positiven Elektrode lassen sich solche wie $Bi_2O_3$, $FeS_2$ oder $BiPbO_n$, die mit Li 1,5 Volt-Zellen ergeben, unterscheiden von anderen wie z. B. $MnO_2$ oder $CF_6$, welche mit Li 3 Volt-Systeme liefern. Festkörperzellen besitzen Festkörperelektrolyte, beispielsweise aus ionenleitendem $Li_3N$, LiJ, Na-β-Alumina oder einem Mischkristall des quaternären Systems $Na_2O$-$ZrO_2$-$P_2O_5$-$SiO_2$, etwa einer Verbindung $Na_{2,94}Zr_{1,54}Si_{2,2}P_{0,8}O_{10,53}$. Als negatives Elektrodenmaterial wird Lithium bevorzugt.

Die erfindungsgemäße Maßnahme macht von der Möglichkeit Gebrauch, einen thermoplastischen Kunststoff wie Polypropylen auch zusammen mit Zusätzen zu extrudieren. Anstelle bekannter Zusätze wie Kohlefasern oder Glasfasern wird nun erfindungsgemäß einem als Dichtungsmaterial bestimmten Polypropylen oder sonstigem infrage kommenden Polymer ein Gettermaterial in bestimmter Menge zugesetzt, so daß sich nach Extrudieren ein Kompound-Polymer ergibt. Dieses wird dann mit entsprechender Form in die Verschlußöffnung des Zellengehäuses eingelegt oder als Dichtung umspritzt.

Von außen herandiffundierender Wasserdampf wird nun von dem Adsorbens ein gefangen. Das einmal in den Getter eingelagerte Wasser bleibt irreversibel an diesen gebunden, da zu seiner Freisetzung Temperaturen erforderlich sind, die beim Betrieb der Zelle nicht auftreten und die Wasserdiffusion wird insgesamt gehemmt. Das Kompound-Polymer gemäß der Erfindung ist somit bei herrschender hoher Luftfeuchte besonders wirksam.

Als negatives Elektrodenmaterial in dem erfindungsgemäßen galvanischen Element wird vorzugsweise Lithium verwendet.

**Patentanspruch**

Galvanisches Element mit einer festen negativen Alkalimetall-Elektrode, einem wasserfreien Elektrolyten und einer festen positiven Elektrode in einem mit einer Kunststoffmasse abgedichteten Metallgehäuse, welches mit einem gasadsorbierenden anorganischen Gettermaterial von hoher spezifischer Oberfläche versehen ist, dadurch gekennzeichnet, daß das anorganische gas- und wasseradsorbierende Gettermaterial in der Kunststoffdichtungsmasse enthalten ist.

**Claim**

A galvanic cell comprising a solid negative alkali metal electrode, an anhydrous electrolyte and a solid positive electrode in a metal casing which is sealed by a synthetic material mass and which is provided with a gas adsorbing inorganic getter material of large specific surface, characterized in that the inorganic gas- and water-adsorbing getter material is contained in the synthetic material sealing mass.

**Revendication**

Elément galvanique avec une électrode négative solide en un métal alcalin, un électrolyte anhydre et une électrode positive solide dans un boîtier en métal étanchéifié par une masse en matière synthétique, qui est pourvu d'un matériau de getter anorganique adsorbant les gaz de haute surface spécifique, caractérisé en ce que le matériau de getter anorganique adsorbant les gaz et l'eau est contenu dans la masse d'étanchéification en matière synthétique.